# EUROPEAN PATENT APPLICATION

(11) **EP 2 474 827 A1**
(43) Date of publication of application: **11.07.2012**
(21) Application number: 10813743.1
(22) Date of filing: 01.09.2010
(51) Int. Cl.: G01N 30/00, G01N 30/26, G01N 30/88

(54) **PRETREATMENT CARTRIDGE FOR SEPARATING SUBSTANCE AND METHOD OF PRETREATMENT USING SAME**

(30) Priority: 01.09.2009 JP 2009221536
(71) Applicant: CellSeed Inc., Tokyo 162-0056 (JP); Kanazawa, Hideko, Sagamihara-shi, Kanagawa 228-0802 (JP)
(72) Inventor: KANAZAWA, Hideko, Kanagawa 252-0318 (JP); OKANO, Teruo, Tokyo 162-8666 (JP)
(74) Representative: HOFFMANN EITLE
(86) International application number: PCT/JP2010/064956
(87) International publication number: WO 2011/027794

(57) **Abstract**

Pretreatment is performed using a pretreatment cartridge for separating substances that is packed with a stationary phase that is coated on its surface with a polymer whose tendency to hydration will change within a temperature range of 0-80°C and which is capable of changing the affinity between the substance to be separated and the surface of the stationary phase in response to the shrinkage or swelling of the polymer chain due to temperature change. By using this pretreatment cartridge for separating substances, a convenient operation will suffice for a sample solution to be reduced to a solution containing the substance that need be separated from the specimen. If this method of pretreatment is used, useful substances can be separated intact by merely changing the temperature and it becomes possible to perform the subsequent analyzing or fraction collecting operation efficiently.

## Description

### TECHNICAL FIELD

The present invention relates to a pretreatment cartridge for separating agrichemicals, pharmaceuticals, peptides, proteins, DNAs and glycolipids and other substances in samples in response to temperature as an external signal, as well as a method of pretreatment using the same.

### BACKGROUND ART

Liquid chromatography techniques in common use today vary are diverse and widely depending on the combination of the stationary phase and the mobile phase and the mode of interactions involved in separation. On account of these techniques, although involving technical limitations, it has become possible to separate and purify pharmaceuticals, as well as separating peptides, proteins, nucleic acids, etc. in the biochemical field. With the growing biomedical application of recombinant proteins and other substances that are produced by genetic engineering procedures, further innovation in these separation/purification techniques is being made at greater speed.

Chromatographic methods that are currently in wide use in the biochemical field include ion-exchange chromatography and reversed-phase chromatography. Ion-exchange chromatography is such a method that with an electrolyte on the surface of an insoluble retention carrier providing the stationary phase, counter ions present in the mobile phase are reversibly adsorbed on the stationary phase to effect separation. Commonly used retention carriers are silica, cellulose, dextran, and copolymers of styrene and divinylbenzene. Ion-exchange groups such as sulfonic acid groups and quaternary ammonium groups are usually introduced into these carriers. The solute is dissociated into cations, anions or amphoteric ions depending on the concentration of hydrogen ions in the mobile phase and, when flowed through an ion-exchange cartridge, this solute competes with the ions within the mobile phase for binding to the oppositely charged exchange groups on the carrier's surface, whereupon it is distributed between the mobile phase and the stationary phase's surface in specified proportions. The rate of the solute movement through the cartridge varies with the strength of the binding and ion-exchange chromatography depends on this for separation. The distribution ratio can be changed by several methods. For example, the concentrations of competing ion species within the mobile phase may be changed; alternatively, the concentration of hydrogen ions in the mobile phase are changed to vary the proportions at which the ion-exchange groups on the carrier's surface are ionized. Thus, ion-exchange chromatography commonly adopts methods of separation by adjusting the ionic strength or hydrogen ion's concentration in the mobile phase. In the process, acids or buffer solutions of high salt concentration are used as the mobile phase and this has caused the disadvantage of impairing the activity of biological components to be separated.

In contrast, reversed-phase chromatography is a method that uses a system composed of a hydrophobic stationary phase and a polar mobile phase. The solute is distributed for separation between the mobile and stationary phases in accordance with the degree of its hydrophobicity. In this case, too, the degree of hydrophobicity of the solvent in the mobile phase is changed so that the distribution between the mobile and stationary phases is varied for effecting elution. In the process, the organic solvent used for the mobile phase has caused the disadvantage of impairing the activity of biological components to be separated. Separation of pharmaceuticals, peptides, proteins, nucleic acids, etc. that are useful in the biochemical field is commonly effected by methods based on the ion-exchange chromatography technique or the reversed-phase chromatography technique. However, as noted above, the current methods suffer the problem of impairing the activity of components to be separated and this can be a serious issue when the target substance is a polymeric material having physiological activity as in the present invention; even if separation is possible, the efficiency is extremely low and further technological innovation has long been desired.

As a further problem, the conventional high-performance liquid chromatography has had many limitations on the sample to be separated. Reversed-phase chromatography is most commonly used as a high-performance chromatography technique; since octadecylsilyl (ODS) groups are immobilized on the surface of the stationary phase used in this technique, proteins will under ordinary conditions adhere to the surface of the stationary phase, degrading the column. The conventional high-performance liquid chromatography is dealt with as if it was completed as a practically feasible system but in fact it has been impossible to load the chromatographic unit with blood and immediately analyze the plasma in it.

To solve these problems, various pretreatment columns, pre-columns in short, have so far been proposed. As an example, Patent Document 1 proposes a pretreatment column that uses a packing material having a dual pore structure defined by specified particle sizes. This column is particularly intended to perform a pretreatment in such a way that a trace amount of an environment-related substance contained in a sample can be analyzed with high efficiency; however, using the pores in the packing material, the pretreatment is only applicable to a limited scope of target substances. Patent Document 2 discloses a method of removing a component in a specimen that interferes with immunological measurement and to this end it uses a packing material made of a resin having high protein adsorbing capability, glass, ceramics, metal, etc. However, in this method, proteins and the like that will interfere with the immunological measurement of the specimen are merely adsorbed and removed before the measurement is started. Patent Document 3 proposes a method of performing a pretreatment of a sample using a column packed with a packing material comprising a porous carrier having pores in the surface that are small enough to reject proteins but large enough to admit peptides to be analyzed, the carrier having been subjected to a treatment that renders its outer surface inactive to proteins while only the interior of the pores has been chemically modified with reactive groups that can adsorb the peptide molecules. According to this method, the proteins in the sample can simply pass through the column to be separated from the other substances; however, the method still has various problems unsolved, two of which are worth mentioning here: due to the uniformity of pore size, it has not been necessarily possible to remove proteins in a rigorous manner; what is more, the recovery of peptides adsorbed on the inner surfaces of pores requires the same operation as in the conventional techniques and this inevitably lowers the physiological activity of peptides. As set forth above, many pretreatment techniques have so far been proposed but every one of them has proved effective only in a limited range.

Under these circumstances, a remarkable high-performance liquid chromatography technique using a temperature-responsive polymer immobilized on the surface of a stationary phase has been proposed (Non-Patent Document 1). This technique is **characterized in that** the behavior (swelling or shrinkage) which the temperature-responsive polymer immobilized on the surface of the stationary phase serving as a column packing material takes upon a temperature change is transformed to the hydrophilic or hydrophobic nature of the stationary phase's surface; as a result, by merely changing the temperature of the stationary phase while keeping the mobile phase aqueous, the interaction between a substance in the sample and the stationary phase's surface can be altered to enable the separation of the substance in the sample. According to this method, the substance to be separated can be recovered in a less damaged state since it is not exposed to acids or buffer solutions of high salt concentration or to organic solvents as in the conventional techniques. In the years to come, substances in diverse fields, useful substances, biomaterials, etc. can hopefully be separated and fraction-collected. Patent Document 4 has proposed a technique for separation by high-performance liquid chromatography using a packing material comprising an electrically charged copolymer **characterized in that** the effective charge density on the surface of a stationary phase is altered by physical stimulation while the mobile phase is kept aqueous. According to this technique, there is no need to use a special mobile phase as required in ion-exchange chromatography or reversed-phase chromatography and a temperature change suffices to ensure that an electrically charged substance can be separated efficiently without damaging its activity. According to the discovery in Patent Document 5, plasma as a blood component is directly injected into a high-performance liquid chromatography column packed with the above-described temperature-responsive chromatographic carrier and the drug in the plasma as well as its metabolite can be assayed without deproteination. In more recent years, the behavior of albumin, the most abundant component in the plasma, was closely studied using radiolabeled albumin and it was confirmed that when the temperature-responsive chromatographic carrier was used, the albumin simply passed through the column at specified temperatures (i.e., without degrading the column) (Non-Patent Document 2). It was also verified in Non-Patent Document 2 that temperature-responsive chromatography was capable of separating and recovering lysozyme without compromising its enzymatic activity. Through the use of packing materials with modified surfaces, it has become possible for the high-performance liquid chromatography technique to perform operations that nobody would have unimagined could be carried out by the conventional techniques.

This separation technique using the packing material with the immobilized temperature-responsive polymer is not limited to high-performance liquid chromatography and it is expected to be also effective in the above-described field of the pretreatment technology. No studies in this respect have been disclosed or suggested in the aforementioned prior art documents.

### PRIOR ART DOCUMENTS

### PATENT DOCUMENTS

Patent Document 1: JP 2005-93064A
Patent Document 2: JP 2008-12383A
Patent Document 3: JP 2005-180302A
Patent Document 4: JP 2000-551251A
Patent Document 5: JP 2005-503106A

### NON-PATENT DOCUMENTS

Non-Patent Document 1: Anal Chem., 68,100-105 (1996)
Non-Patent Document 2: Journal of Chromatography A, 1191, 157-161 (2008)

### SUMMARY OF THE INVENTION

### PROBLEMS TO BE SOLVED BY THE INVENTION

The present invention has been accomplished with a view to solving the aforementioned problems of the prior art. To be more specific, an object of the present invention is to provide a novel pretreatment cartridge for separating substances that is based on a completely different approach than what have been taken in the prior art. Another object of the present invention is to provide a method for pretreatment of sample solutions using the cartridge.

### MEANS FOR SOLVING THE PROBLEMS

To solve the aforementioned problems, the present inventors have conducted research and development by making studies from various angles. As a result, it has been shown that pretreatment of a substance-containing solution can be effected conveniently by using a stationary phase that is coated on its surface with a polymer whose tendency to hydration will change within a temperature range of 0-80°C and which is capable of changing the affinity for the substance on the surface of the stationary phase in response to the shrinkage or swelling of the polymer chain due to temperature change. The technique presented by the present invention is entirely unexpected from the prior art, so there can be expected a development of a novel pretreatment base that has not existed at all in the prior art. The present invention has been accomplished on the basis of these findings.

Thus, the present invention provides a pretreatment cartridge for separating substances, the cartridge being packed with a stationary phase that is coated on its surface with a polymer whose tendency to hydration will change within a temperature range of 0-80°C and which is capable of changing the affinity for the substance on the surface of the stationary phase in response to the shrinkage or swelling of the polymer chain due to temperature change. The present invention also provides a method for pretreatment of sample solutions by using the pretreatment cartridge for separating substances at specified temperatures so that the substance is separated by an aqueous mobile phase.

### ADVANTAGEOUS EFFECT OF THE INVENTION

By using the pretreatment cartridge for separating substances that is described herein, a convenient operation will suffice for a sample solution to be reduced to a solution containing the substance that need be separated from the sample solution. If this method of pretreatment is used, the substance of interest can be separated intact by merely changing the temperature and the subsequent analyzing or fraction collecting operation can be performed efficiently.

### BRIEF DESCRIPTION OF THE DRAWINGS

FIG. 1 is a flowchart depicting the separation procedure that was taken in Example 2; the conditions for analysis by HPLC (high-performance liquid chromatography) were as follows:
   Column: Inertsil^{®} ODS-3 (150 x 4.6 mm; I.D. 5 urn); Temperature: 40°C; Eluent: 20 mM CH₃COONH₄ (pH 4.8)/CH₃OH = 1/1; Detection: UV 220 nm; Flow rate: 1.0 mL/min; Injection volume: 10 µL.
FIG. 2 is a graph showing the result of carbamazepine measurements by high-performance liquid chromatography on ODS column for the respective fractions collected in Example 2.
FIG. 3 is a diagram showing the result of integrating the amounts of carbamazepine in the respective fractions collected in Example 2; the arrows key the numbers of the respective collected fractions to their relative positions in the column.
FIG. 4 is an illustration of the separation procedure that was taken in Example 2.
FIG. 5 is a set of charts showing the results of serum and carbamazepine measurements by high-performance liquid chromatography on ODS column for the respective fractions collected in Example 3.
FIG 6 is a graph showing the result of carbamazepine measurements by high-performance liquid chromatography on ODS column for the respective fractions collected in Example 3.
FIG. 7 is a diagram showing the result of integrating the amounts of carbamazepine in the respective fractions collected in Example 3; the arrows key the numbers of the respective collected fractions to their relative positions in the column.
FIG. 8 is a flowchart depicting the separation procedure that was taken in Example 4; the conditions for analysis by HPLC (high-performance liquid chromatography) were as follows:
   Column: Inertsil^{®} ODS-3 (150 x 4.6 mm; I.D. 5 µm); Temperature: 40 °C; Eluent: H₂O/CH₃OH = 2/3; Detection: UV 254 nm; Flow rate: 1.0 mL/min; Injection volume: 20 µL.
FIG. 9 is a graph showing the result of hydrocortisone measurements by high-performance liquid chromatography on ODS column for the respective fractions collected in Example 4.
FIG. 10 is a diagram showing the result of integrating the amounts of hydrocortisone in the respective fractions collected in Example 4; the arrows key the numbers of the respective collected fractions to their relative positions in the column.
FIG. 11 is a flowchart depicting the separation procedure that was taken in Example 5; the conditions for analysis by HPLC (high-performance liquid chromatography) were as follows:
   Column: Inertsil^{®} ODS-3 (150 x 4.6 mm; LD. 5 µm); Temperature: 40°C; Eluent: H₂O/CH₃OH = 2/3; Detection: UV 254 nm; Flow rate: 1.0 mL/min; Injection volume: 20 µL.
FIG. 12 is a graph showing the result of hydrocortisone measurements by high-performance liquid chromatography on ODS column for the respective fractions collected in Example 5.
FIG. 13 is a graph showing the result of dexamethasone measurements by high-performance liquid chromatography on ODS column for the respective fractions collected in Example 5.
FIG. 14 is a graph showing the result of testosterone measurements by high-performance liquid chromatography on ODS column for the respective fractions collected in Example 5.
FIG. 15 is a diagram showing the result of integrating the amounts of hydrocortisone, dexamethasone and testosterone in the respective fractions collected in Example 5; the arrows key the numbers of the respective collected fractions to their relative positions in each of the columns.

### MODES FOR CARRYING OUT THE INVENTION

The packing material in the pretreatment cartridge for separating substances according to the present invention has a temperature-responsive polymer immobilized on its surface, the polymer being such that its tendency to hydration will change within a temperature range of 0-80°C. The polymer coating on the surface of the stationary phase according to the present invention will be hydrated or dehydrated upon temperature change over a range of from 0°C to 80°C, preferably from 10°C to 50°C, more preferably from 20°C to 45°C. Beyond 80°C, water as the mobile phase will evaporate or otherwise lower the operating efficiency, which is undesirable. Below 0°C, the mobile phase might freeze, which is again undesirable. The temperature-responsive polymer to be used in the present invention may be a homopolymer or a copolymer. Such polymers include, for example, the polymers described in JP Hei 2-211865A (JP1990-211865A). Specifically, they may be obtained by homopolymerization or copolymerization of the following monomers. The monomers that can be used include, for example, (meth)acrylamide compounds, N- (or N,N-di)alkyl-substituted (meth)acrylamide derivatives or vinylether derivatives; in the case of copolymers, any two or more of these monomers can be used. If desired, products of copolymerization with monomers other than those listed above, or products or grafting or copolymerization of polymers, or mixtures of homopolymers and copolymers may also be used. It is also possible to crosslink the polymers to such an extent that their properties will not be impaired. Such temperature-responsive polymers include poly-N-n-propylacrylamide (the homopolymer having a lower critical solution temperature of 21°C), poIy-N-n-propylmethacrylamide (27°C as defined above), poly-N-isopropylacrylamide (32°C as defined above), poly-N-isopropylmethacrylamide (ca. 43°C as defined above), poly-N-cyclopropylacrylamide (45°C as defined above), poly-N-ethoxyethylacrylamide (ca. 35°C as defined above), poly-N-ethoxyethylmethacrylamide (ca. 45°C as defined above), (ca. 45°C as defined above), poly-N-tetrahydrofurfurylacrylamide (ca. 28°C as defined above), poly-N-tetrahydrofurfurylmethacrylamide (ca. 35°C as defined above), poly-N,N-ethylmethylacrylamide (56 °C as defined above), poly-N,N-diethylacrylamide (32°C as defined above), etc. Monomers for copolymerization that can be used in the present invention include, but are not particularly limited to, polyacrylamide, poly-N,N-diethylacrylai,nide, poly-N,N-dimethylacrylamide, polyethylene oxide, polyacrylic acid and salts thereof, as well as hydrated polymers such as polyhydroxyethyl methacrylate, polyhydroxyethyl acrylate, polyvinyl alcohol, polyvinylpyrrolidone, cellulose, and carboxymethyl cellulose.

Among the polymers listed above, poly(N-isopropylacrylamide) has a lower critical temperature at 32°C, so the stationary phase's surface chemically modified with this polymer will greatly change its hydrophilic/hydrophobic surface property at this critical temperature; when a chromatographic packing material is used after this polymer is grafted to or coated on its surface, its sample retaining power is changed with temperature and, as the result, the retention behavior can be controlled by temperature without causing any change in the makeup of the elution. To adjust the lower critical temperatures to 32°C and above, N-isopropylacrylamide may be copolymerized with hydrophilic comonomers such as acrylamide, methacrylic acid, acrylic acid, dimethyacrylamide and vinylpyrrolidone, which are more hydrophilic than isopropylacrylamide. To adjust the lower critical temperatures to below 32 °C, copolymerization may be performed with hydrophobic comonomers such as styrene, alkyl methacrylates and alkyl acrylates, which are less hydrophilic than isopropylacrylamide.

Poly(diethylacrylamide) has lower critical temperatures of about 30°C to 32°C, across which its hydrophilic/hydrophobic surface property changes, and as in the aforementioned case of poly(N-isopropylacrylamide), sample retention can be adjusted by temperature. The novel chromatographic carrier to be used in the present invention is prepared through chemical modification or polymer coating.

The polymers for use in the present invention that are to be immobilized on the stationary phase's surface may be of an electrically charged type. The method of imparting electric charges is not particularly limited but it is generally preferred that synthesis of polymer chains to be coated on the stationary phase's surface, for example, synthesis of the aforementioned temperature-responsive polymer is performed by copolymerization of monomers including ionic ones. As a result of this, building blocks in polymers having an amino group may include dialkylaminoalkyl (meth)acrylamides, dialkylaminoalkyl (meth)acrylates, aminoalkyl (meth)acrylates, aminostyrene, aminoalkylstyrenes, aminoalkyl (meth)acrylamides, alkyloxyalkyl trimethylammonium salts, (meth)acrylamidoalkyl trimethylammonium salts, etc. Building blocks in polymers having a carboxyl group include acrylic acid and methacrylic acid; building blocks in polymers having sulfonic acid include (meth)acrylamidoalkylsulfonic acids.

Useful as the material for the stationary phase that is to be coated on the surface are not only silica, polysaccharides, glass, polystyrene, poly(methyl methacrylate), etc. that are used in chromatographic carriers but also every other material that can generally be given a shape, as exemplified by polymer compounds other than those listed above and ceramics as well. The shape of the stationary phase is not particularly limited, either, and it may be of any type such as a beaded (particulate) packing material, a monolithic packing material, or even a disk-shaped packing material or a membranous packing material; two or more of these types may be combined. In the case of a beaded packing material, the particle size is preferably not greater than 100 µm, more preferably not greater than 80 µm, and even more preferably not greater than 60 µm. If the particle size is greater than 100 µm, the sample cannot be brought into adequate contact with the surface of the packing material, which is not preferred for use in the pretreatment cartridge for separating substances according to the present invention. The lower limit of the particle size is not particularly limited but if the proportion of a packing material made of fine particles increases, the column packed with that material will undergo a greater pressure loss and high-performance liquid chromatography in apparatus is required, which again is not preferred for using the pretreatment cartridge for separating substances according to the present invention. Thus, it is essential for the present invention to use a packing material with such a particle size distribution that pretreatment can be effected without using any special apparatus. The pore size of the beaded packing material is not particularly limited but it is preferably between 10 and 100 nm, more preferably between 20 and 90 nm, and even more preferably between 30 and 80 nm. The present invention, as already noted, does not use any special apparatus but develops a sample under low to medium pressure, so the pore size is not a critical factor and even packing materials with no pores at all can be used. In the present invention, the packing material may be monolithic or disk-shaped or even membranous. The size of channels is not particularly limited but an increase in the number of fine channels will lead to a greater pressure loss and high-performance liquid chromatography in apparatus is required, which is not preferred for using the pretreatment cartridge for separating substances according to the present invention. Thus, it is essential for the present invention to have such a channel distribution that pretreatment can be effected without using any special apparatus.

Immobilization for polymer introduction into the surface of the stationary phase can be achieved by either surface grafting or radical polymerization. In surface grafting, a given size of the temperature-responsive polymer is first synthesized and then joined to the carrier whereas in radical polymerization, the intended polymer is constructed by in situ polymerization of a monomer on the surface of the carrier. This method enables the temperature-responsive polymer to be introduced into the carrier surface at a higher density than is possible by surface grafting. This increases the hydrophobicity of the carrier surface and provides ease with which the retention time can be controlled. In addition, non-specific adsorption due to the interaction with the silica gel on the carrier surface can be inhibited. 1'olymer coating of the stationary phase's surface may specifically be performed by various methods that include, but are not particularly limited to, the method described in JP Hei 2-211865A. Thus, such coating can be formed by subjecting a substrate and the monomers or polymers described above to coupling reaction using a silane coupling agent, thermal reaction, exposure to electron beams (EB), γ irradiation, UV irradiation, plasma treatment, corona treatment, organic polymerization reaction, etc.

Radical polymerization that may be performed is not particularly limited as long as the temperature-responsive polymer is immobilized by the living radical polymerization method starting from an initiator immobilized on the substrate surface. In one example, a polymerization initiator is immobilized on the substrate surface and the temperature-responsive polymer is allowed to grow in a reaction from this initiator in the presence of a catalyst by Atom Transfer Radical Polymerization (ATRP polymerization). The initiator to be used in the process is not particularly limited but when the substrate is silica or glass as in the present invention, exemplary initiators include 1-trichlorosilyl-2-(m-chloromethylphenyl)ethane, 1-trichlora-2-(p- chloromethylphenyl)ethane, a mixture of 1-trichlorosilyl-2-(m-chloromethylphenyl)ethane and 1-trichloro-2-(p-chloromethylphenyl)ethane, 2-(4-chlorosvlfonylphenyl)ethyltrimethoxysilane, (3-(2-bromoisobutyryl)propyl)dimethylethoxysilane, etc. In the present invention, a polymer chain is allowed to grow from these initiators. The catalyst that may be used in the process is not particularly limited but if N-alkyl-substituted (meth)acrylamide derivatives are selected as polymers capable of change in their tendency to hydration, useful catalysts are copper halides (Cu¹X) such Cu¹Cl and Cu¹Br. Ligand complexes for the copper halides are not particularly limited, either, but they may include tris(2-(dimethylamino)ethyl)amine (Me₆TREN), N,N,N',N'-pentarnethyldlethylenetriamine (PMDETA), 1,1,4,7,10,10-hexamethyltriethylenetetramine (HMTETA), 1,4,8,11-tetramethyl-1,4,8,11-azacyclotetradecane (Me₄Cyclam), bipyridine, etc. Yet another applicable method is Reversible Addition-Fragmentation Chain Transfer Radical Polymerization (RAFT polymerization), in which the temperature-responsive polymer is allowed to grow in a reaction from the above-described initiator immobilized on the substrate surface, in the co-presence of a RAFT agent by surface-initiated radical polymerization. The initiator to be used in the process is not particularly limited but when the substrate is silica or glass as in the present invention, exemplary initiators include 2,2'-azobis(isobutyronitrile), 2,2'-azobis(4-methoxy-2,4-dimethylvaleronitrile) (V-70), 2,2'-azobis[(2-carboa:yethyl)-2-(methylpropionamidine)] (V-057), etc., with a silane coupling agent being also used in the reaction. In the present invention, a polymer chain is allowed to grow from these initiators. The RAFT agent that may be used in the process is not particularly limited but examples include benzyldithiobenzoate, cumyldithiobenzoate, 2-cyanopropyldithiobenzoate, 1-phenylethylphenyldithioacetate, cumylphenyldithioacetate, benzyl 1-pyrrolecarbodithioate, cumyl 1-pyrrolecarbodithioate, etc.

The solvent that may be used for polymerization in the present invention is not particularly limited but in the case of ATRP polymerization, isopropyl alcohol (IPA) is preferred. As a result of various studies they conducted, the present inventors found that when N-isopropylacrylamide chosen as a starting material for the temperature-responsive polymer was subjected to Atom Transfer Radical Polymerization reaction in solution at room temperature, the reaction rate was equally high irrespective of whether dimethylformaldehyde (DMF), water or IPA was chosen as the reaction solvent. In the case of Atom Transfer Radical Polymerization (ATRP), an ATRP polymerization initiator is immobilized and, as noted above, the polymer having electric charges and whose tendency to hydration will change within a temperature range of 0-80°C is grown in a reaction from this initiator by Atom Transfer Radical Polymerization, with the solvent being typically isopropyl alcohol; other conditions for polymerization such as the initiator's concentration, copper halide's concentration, ligand complex's concentration, reaction temperature and reaction time are not particularly limited and may be changed according to the object. In addition, the reaction solution may be kept still or stirred but in view of the need to achieve uniform immobilization on the carrier surface, the latter state is preferred. Preferred solvents for use in RAFT polymerization include 1,4-dioxane and dimethylformaldehyde (DMF). Again, the solvent is not limited at all and may be selected as appropriate for the kinds of the monomer, RAFT agent and polymerization initiator that are used in the polymerization reaction. To perform the RAFT method, a RAFT polymerization initiator is immobilized and, with a solvent such as 1,4-dioxane being used, the polymer whose tendency to hydrate will change within a temperature range of 0-80°C is grown in a reaction from this initiator by surface-initiated radical polymerization in the co-presence of a RAFT agent; other conditions for polymerization such as the initiator's concentration, RAFT agent's concentration, reaction temperature and reaction time are not particularly limited and may be changed according to the object. In addition, the reaction solution may be kept still or stirred but in view of the need to achieve uniform immobilization on the carrier surface, the latter state is preferred. Another advantage of immobilizing the temperature-responsive polymer by the RAFT method is that unlike the ATRP method, this method has no need to use metal ions and is free from the trouble of washing the substrate after the temperature-responsive polymer has been immobilized on it. The RAFT method is also advantageous for the reason that the polymerization conditions per se are convenient.

In the present invention, the above-described polymers are immobilized at high density. And if the ATRP or RAFT method is chosen to immobilize the polymers, the degree of their immobilization as expressed by the number of molecule chains per unit area is preferably at least 0.08 chains/nm², more preferably at least 0.1 chain/nm², and even more preferably at least 0.12 chains/nm². If the degree of polymer immobilization on the substrate surface is less than 0.08 chains/nm², the characteristics of the individual polymer chains are merely developed as in the case of polymer immobilization on the substrate surface by the prior art techniques and this is not preferred for the purpose of providing the carrier of the present invention. The method of working out the numerical values that indicate the degree of polymer immobilization is not particularly limited and the following is just one example: a polymer is prepared under the same reaction conditions except that it is not immobilized on the substrate surface; the resulting polymer chain is analyzed to determine its molecular weight; the carrier on which the polymer has been immobilized is subjected to elemental analysis or otherwise analyzed to determine the amount of the polymer immobilized; the degree of polymer immobilization can be calculated from the molecular weight of the polymer and the amount of its immobilization thus determined.

The molecular weights of the polymers to be coated on the carrier surface are not particularly limited as long as they are great enough to ensure that their tendency to hydration will change in the temperature range of 0-80°C but the polymer's molecular weight is preferably at least 1000, more preferably at least 2000, and even more preferably at least 5000. Below 1000, the polymer's molecular weight is too low to cause a change in its tendency to hydration and this is not preferred. Beyond 5000, the polymer's molecular weight is unduly high and hence its molecule per se becomes bulky, leading to decreased temperature response, which again is not preferred.

The amount of polymer immobilization on the substrate as defined in the present invention is preferably within the range of 0.8-10.0 mg/m², more preferably within the range of 0.9-8.0 mg/m², and even more preferably within the range of 1.0-6.0 mglm². Below 0.8 mg/m², no temperature response will be observed; at values higher than 10.0 mg/m², the bulkiness of the polymer will also decrease the temperature response, which again is not preferred. The amount of polymer immobilization may be measured in the usual manner, for example, by elemental analysis or ESCA, but any other method may be employed. The state of the polymers to be immobilized in the present invention is not particularly limited and may be linear or crosslinked; in order to enhance their response to temperature and immobilize them at high density on the substrate surface, the polymers are preferably in a linear state.

The pretreatment cartridge of the present invention is a cartridge that is packed with the substrate made of the material described above and formed in the shape also described above. The shape of the cartridge is not particularly limited but since it is essential that the capacity of the cartridge be great enough to achieve satisfactory separation of substances that need be separated by the pretreatment in accordance with the present invention, the shape of the cartridge varies with the amount of the sample to be measured. The cross section of the cartridge is not particularly limited and may be circular or polygonal, provided that the channel length is preferably greater than the minor axis (the diameter of a circle or the shortest axis that passes through the center of a polygon.) For example, a cartridge having a capacity of about 0.5 µL suffices for 0.1 mL of serum or plasma and a capacity of about 50 µL suffices for 10 mL of serum or plasma but these are not the sole examples since the cartridge's length and cross-sectional area should also be considered. To give typical values, the minor axis of the cross section may be within the range from 0.1 mm to 30 mm and the channel length from 0.2 mm to 100 mm.

Examples of the above-mentioned material from which to make the cartridge include various organic and inorganic materials, and the following are preferably used: resins such as polymethyl methacrylate (PMMA), polycarbonate, polypropylene, polyethylene, polymethylpentene, polystyrene, polytetrafluoroethylene, ABS resin, polydimethylsiloxane and silicone, as well as copolymers or composites containing those high-molecular weight compounds; glasses such as quartz glass, pressure-resistant glass, soda glass, borate glass, silicate glass and borosilicate glass; ceramics and their composites. The method of producing the cartridge from these materials is not particularly limited.

The separation performance of the pretreatment cartridge for separating substances as obtained by the present invention depends on the temperature of the carrier packed into the column. The method of applying temperature load to the carrier is not particularly constrained but examples include equipping the whole or part of the carrier-packed cartridge with an aluminum block, water bath, air layer, jacket or the like that are held at a specified temperature, or flowing a sample solution and a mobile phase that are held at a specified temperature.

The method of pretreatment to be performed in the present invention is not particularly limited and, in one example, the critical temperature at which the carriers surface's characteristics will change is preliminarily determined and the substance of interest is separated by providing a temperature change across that critical temperature. In this case, the carrier surface's characteristics are greatly altered by temperature change alone, so the time for which a signal is emitted (retention time) is expected to vary considerably depending on the substance to be separated. In the case of the present invention, separation by providing a temperature change across that critical temperature at which the carrier surface's characteristics are greatly altered is the most effective way to use the cartridge. Alternatively, another method of separation may be employed and that is a cateh-and-release based method, in which a solute is adsorbed on the obtained temperature-responsive carrier and then temperature is changed to alter the carrier surface's characteristics so that the adsorbed solute is released. The amount of the solute to be adsorbed in this method may or may not exceed the adsorption capacity of the carrier. Whichever the case, the alternative method comprises adsorbing the solute on the carrier and then changing the temperature to alter the carrier surface's characteristics so that the adsorbed solute is released.

The method by which the liquid sample is supplied to the pretreatment cartridge for separating substances according to the present invention is not particularly limited and it may be supplied under gravity, by centrifugal force, under pressure through a syringe or the like, or by suction. A. more recent, common practice comprises simultaneously manipulating a plurality of samples charged into a multi-well type container; in this case, a multi-cartridge fabricated in accordance with the number of multiple wells may be used and the sample is conveniently supplied by suction. Whichever method may be used to supply the sample, the present invention can be carried out by a convenient operation without using any special apparatus.

The method of pretreatment that is provided by the present invention may use a buffer solution as the mobile phase but it does not have to use any organic solvent. The "buffer solution" referred to above is an aqueous solution that contains inorganic salts and specific examples include a phosphate buffer, Tris buffer, an ammonium chloride buffer, etc.; the buffer solution that can be used is not particularly restricted as long as it is selected from among common buffers. The concentration of inorganic salts in the mobile phase is preferably 5-50 mM, more preferably 10-40 mM, and even more preferably 15-35 mM. If the concentration of inorganic salts in the mobile phase is lower than 5 mM, certain problems occur; for one thing, if the substance to be separated is a physiologically active substance, its activity might be impaired, and for another, if the surface of the stationary phase possesses electric charges, the degree of its dissociation will increase to get the substance of interest to be adsorbed firmly on the substrate surface, with the result that the substance to be separated cannot be easily stripped from the carrier's surface by the subsequent operation and this is by no means preferred. On the other hand, if the concentration of inorganic salts is higher than 50 mM, the degree of dissociation of ion-exchange groups on the stationary phase's surface is reduced to make it difficult to retain the solute on the carrier's surface, whereupon it eventually becomes difficult to separate the solute, which again is not preferred.

Using the above-described pretreatment cartridge for separating substances according to the present invention, one can perform pretreatment of various substances. Examples of such pretreatment include, but are not particularly limited to, the separation of environmental samples such as dioxins, polybiphenyl chloride, agrichemicals, endocrine disrupters, heavy metals, proteins that are contained in rivers, seas, underground water, soil, etc.; the separation, fraction collection and purification of physiologically active substances such as peptides, proteins, and extremely useful low-molecular weight compounds that can be used in pharmaceuticals and the like; as well as the separation, purification and the like of substances in the blood, plasma, and urine. The separation process can be accomplished by the convenient operation of merely changing the temperature in the cartridge without using any organic solvent, so neither denaturation nor other forms of deterioration are observed in the substances separated.

By using the pretreatment cartridge for separating substances that has been described herein, a convenient operation will suffice for a sample solution to be reduced to a solution containing the substance that need be separated from the sample solution. If this method of pretreatment is used, the substance of interest can be separated intact by merely changing the temperature and the subsequent analyzing or fraction collectting operation can be performer efficiently.

### EXAMPLES

On the following pages, the present invention will be described in greater detail by reference to working examples, which are by no means intended to limit the scope of the invention.

### EXAMPLE 1

A surface of a stationary phase was prepared through the following two stages.
1-a) To introduce a polymerization initiator into an (aminopropyl) silica gel, the following compounds were used.

| | |
|---|---|
| (Aminopropyl)silica gel | 5 g |
| V-501 [4,4'-azobis(4-cyanovalcric acid) | |
| (MW: 280.28)] | 3.5 g (12.5 mmol) |
| EEDQ [N-Ethoxycarbonyl--2'ethoxy-1,2-dihydroquinohnc] | |
| (MW: 247.30)] | 6.18 g (25.0 mmol) |

With EEDQ being used as a condensing agent for V-501, the indicated amounts of the two compounds were dissolved in 50 mL of DMF and the (aminopropyl)silica gel was dispersed in the resulting solution to initiate a reaction. While shielded from light, the reaction system was bubbled with N₂ (nitrogen) gas for 30 minutes and after complete N₂ purge, reaction was continued for another six hours at room temperature, with a N₂ balloon being fitted on the reaction vessel. After the reaction, the product was filtered and washed with DMF, whereby the polymerization initiator was introduced into the surface of the silica gel.
1-b) To form a temperature-responsive stationary phase's surface, the following compounds were used.

| | |
|---|---|
| V-501 wound silica gel prepared in 1-a | 4 g |
| IPAAm | 10 g |
| BIS [N,N'-methylerte-bis(acrylamide) (MW: 154.17)] | 0.27 g |

The above-indicated amounts of V-501 bound silica gel prepared in 1-a, IPAAm and BIS were dissolved in 200 mL of EtOH. While shielded from light, the solution was bubbled with N₂ for an hour and after complete N₂ purge, reaction was carried out for 5 hours at 70°C (oil bath), with a N₂ balloon being fitted on the reaction vessel. As a result, a positively charged PIPAAm-surfaced gel layer was formed. After the reaction, the product was filtered and washed with methanol and water to make a packing material, which was vacuum-dried and stored in a desiccator. A specified amount (150 mg) of the packing material was used to fabricate a pretreatment cartridge (4 mm/1 mL).

### EXAMPLE 2

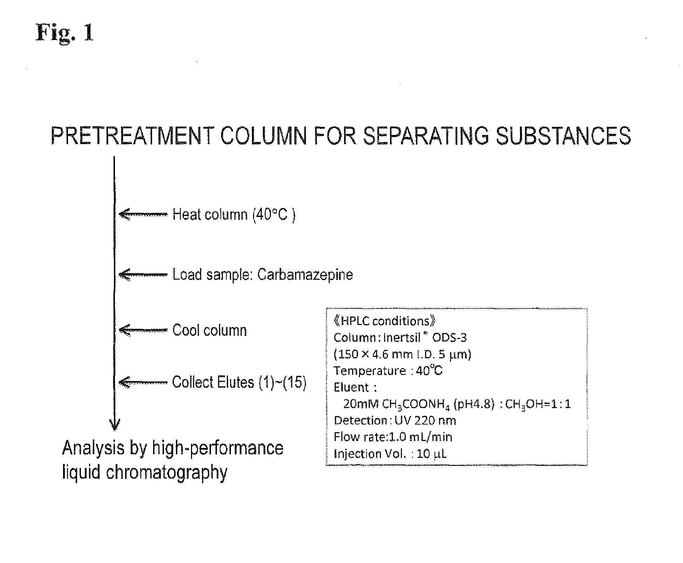

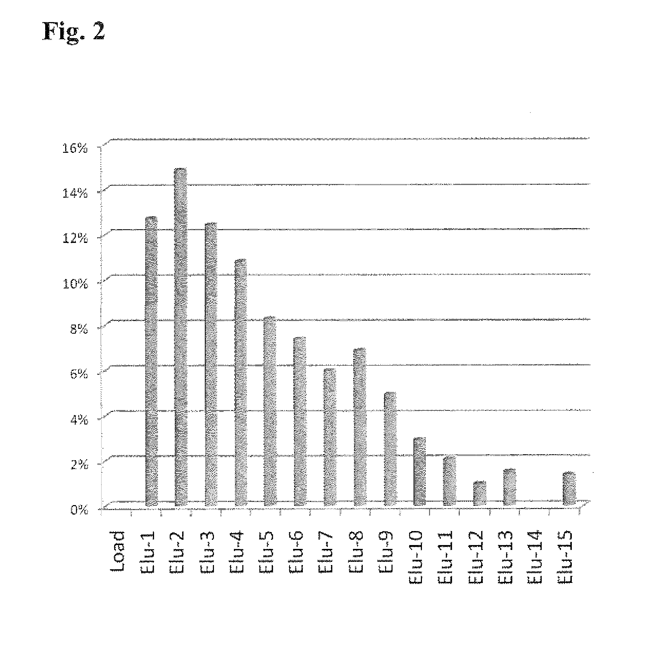

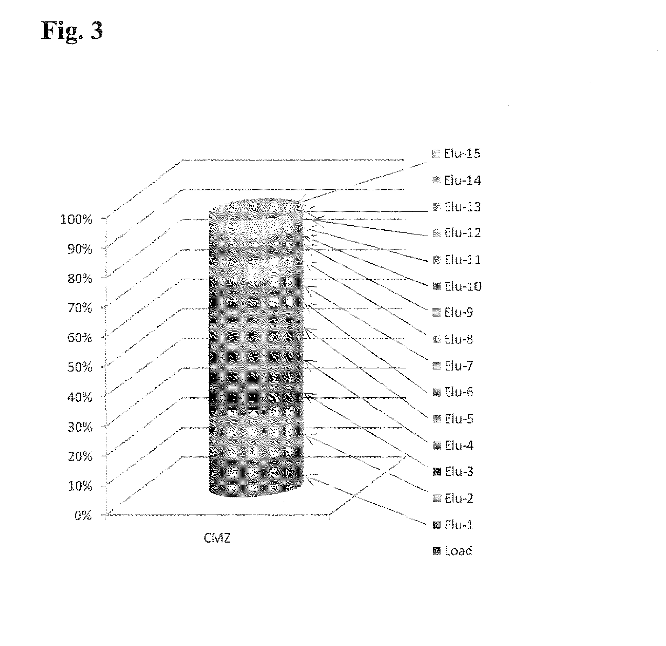

The silica gel carrier-packed cartridge as fabricated in Example 1 was used to separate carbamazepine under the conditions depicted in Fig. 1. Specifically, the cartridge preliminarily heated to 40°C was charged with 100 µL of carbamazepine (10 u-g/mL) and subsequently cooled to 5°C. Thereafter, water with 5°C was flowed and 15 elutes were collected in 10-µL portions. The collected elutes were subjected to high-performance chromatography on an ODS column (mobile phase consisting of 20 mM CH₃COONH₄ (pH 4.8) and CH₃OH at a ratio of 1:1; flow rate, 1.0 mL/min) to measure the amount of carbamazepine in each elute. The results are shown in Fig. 2. Integrating the amounts of carbamazepine in all elutes gave 93% recovery (Fig. 3). It can be seen that if the pretreatment cartridge of the present invention for separating substances is used, carbamazepine can be retained by a convenient method and then recovered with high yield by merely cooling the cartridge.

### EXAMPLE 3

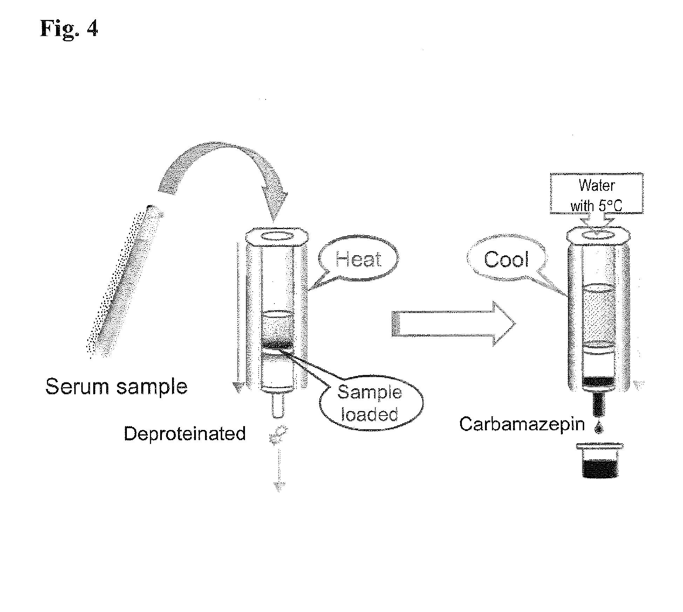

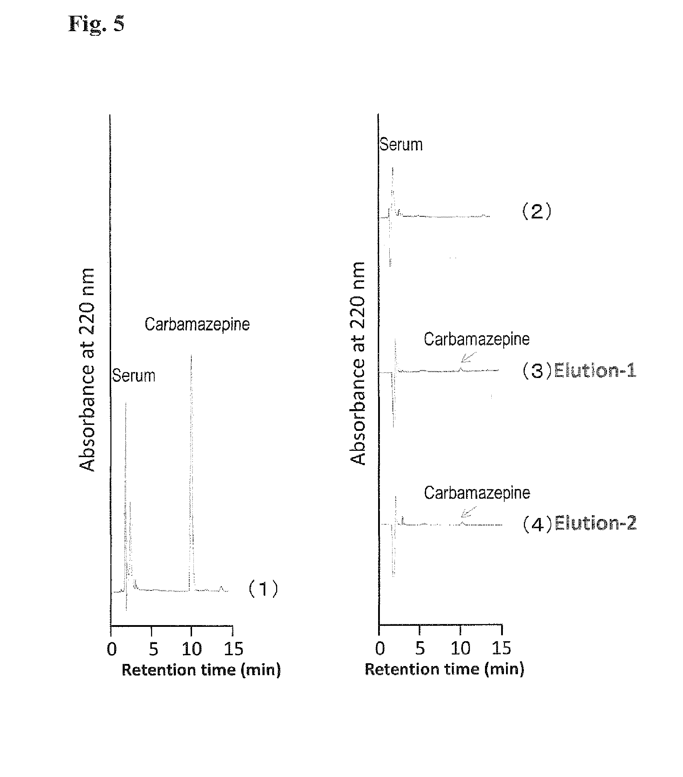

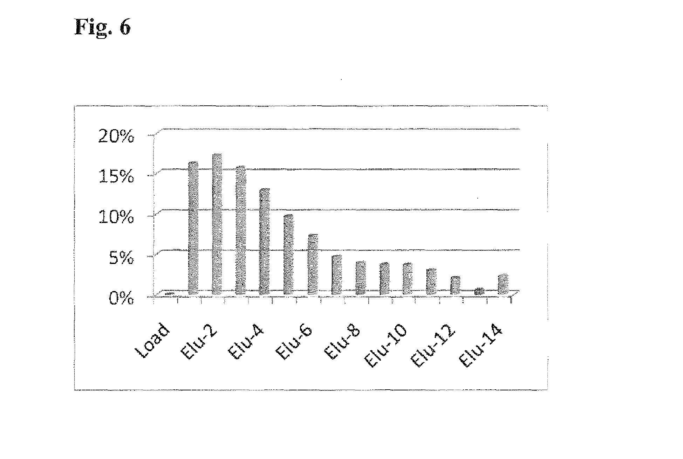

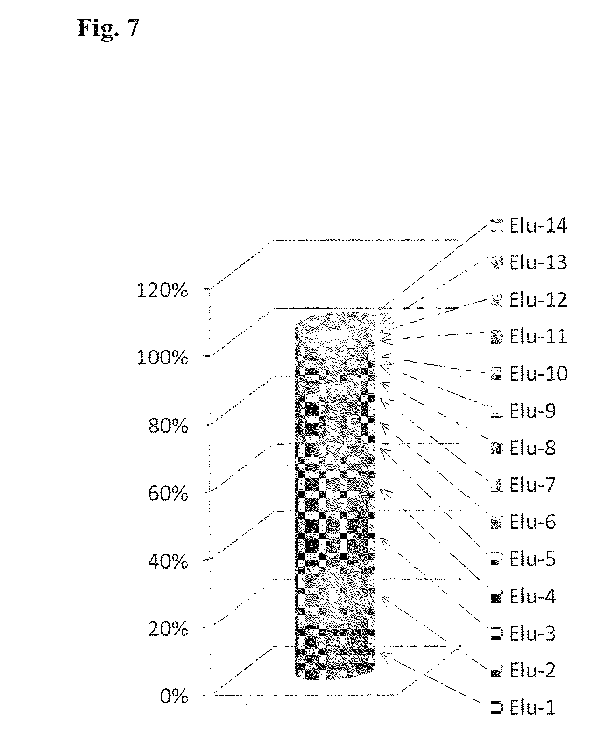

The procedure of Example 2 was repeated (Fig. 4), except that 1 µL of human serum was added to the sample and l4elutes were collected in 10-µL portions. A human serum containing sample feed solution as prepared under the same conditions as in Example 2 was subjected to analysis by high-performance liquid chromatography and the results are shown in Pig. 5(1). Obviously, the feed solution had two peaks, one for the serum and the other for carbamazepine. This feed solution was injected into the cartridge and the serum was not retained on the packing material but simply passed through the cartridge (Fig. 5(2)). The collected elutes were then subjected to high-performance chromatography on an ODS column to measure the amount of carbamazepine in each elute. The data for the first and second elutions are shown in Figs. 5(3) and (4). Neither elute had a peak for the serum. The amounts of carbamazepine in the respective elutes are shown in Fig. 6. Integrating the amounts of carbamazepine in all elutes gave 103% recovery (Fig. 7). If the pretreatment cartridge of the present invention for separating substances is used, serum and carbamazepine can be separated by a convenient method. In addition, it can be seen that by using the pretreatment cartridge of the present invention for separating substances, carbamazepine can be retained and then recovered with high yield by merely cooling the cartridge.

### EXAMPLE 4

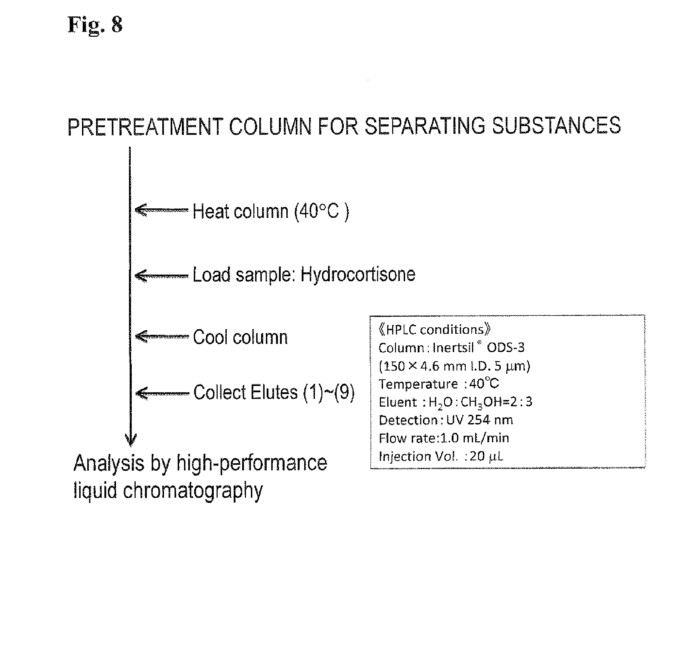

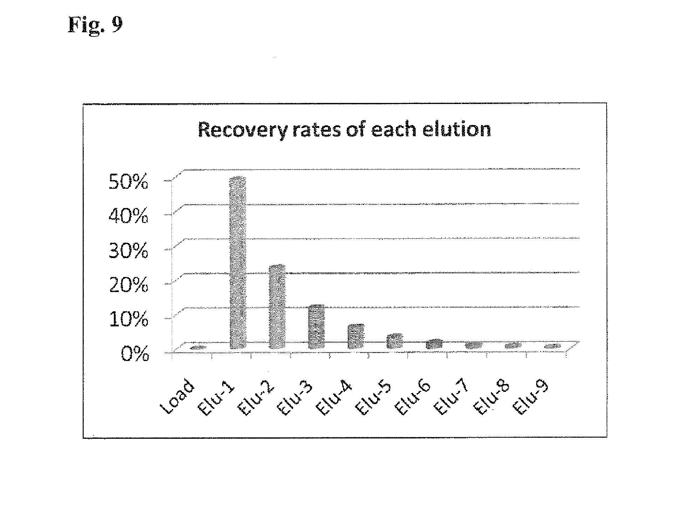

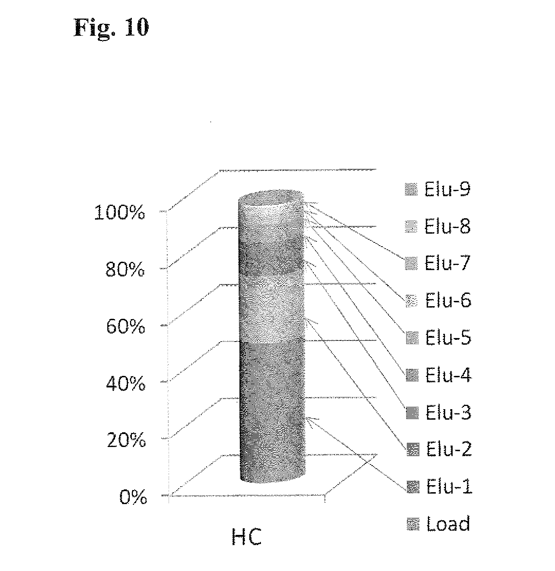

Using the silica gel carrier-packed cartridge as fabricated in Example 1, hydrocortisone was separated under the conditions depicted in Fig. 8. Specifically, the cartridge preliminarily heated to 40°C was charged with 100 µL of hydrocortisone (10 µg/mL) and subsequently cooled to 5°C. Thereafter, water with 5°C was flowed and 9 elutes were collected in 20-µL portions. The collected elutes were subjected to high-performance chromatography on an ODS column (mobile phase consisting of H₂O and CH₃OH at a ratio of 1:1; flow rate, 1.0 mL/min) to measure the amount of hydrocortisone in each elute. The results are shown in Fig. 10. Integrating the amounts of hydrocortisone in all elutes gave 97% recovery (Fig. 9). It can be seen that if the pretreatment cartridge of the present invention for separating substances is used, hydrocortisone can be retained by a convenient method and then recovered with high yield by merely cooling the cartridge.

### EXAMPLE 5

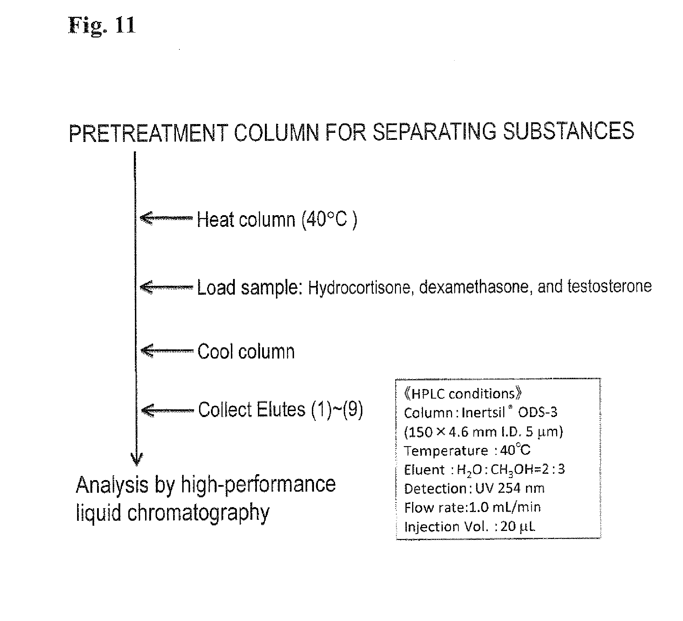

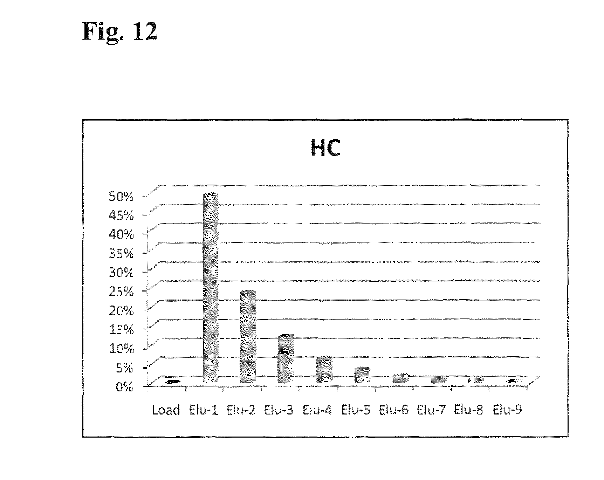

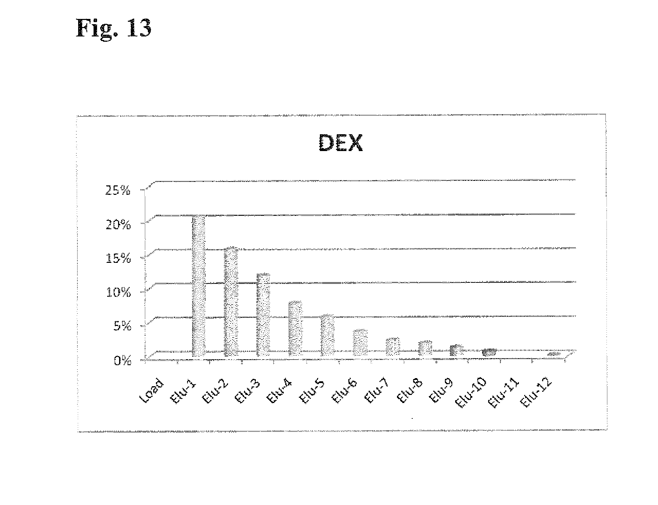

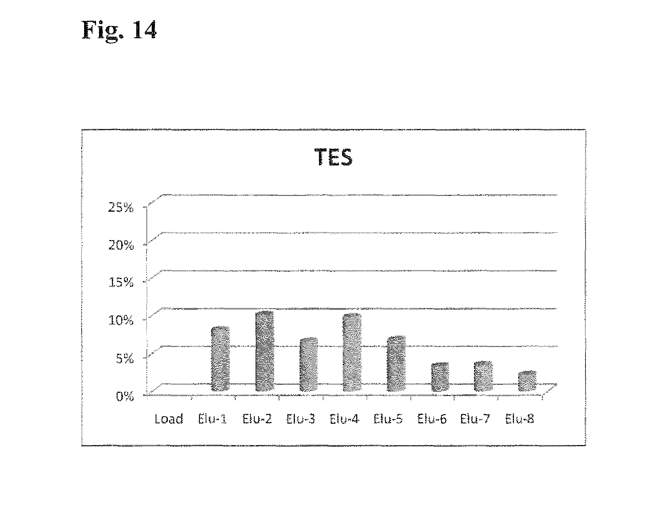

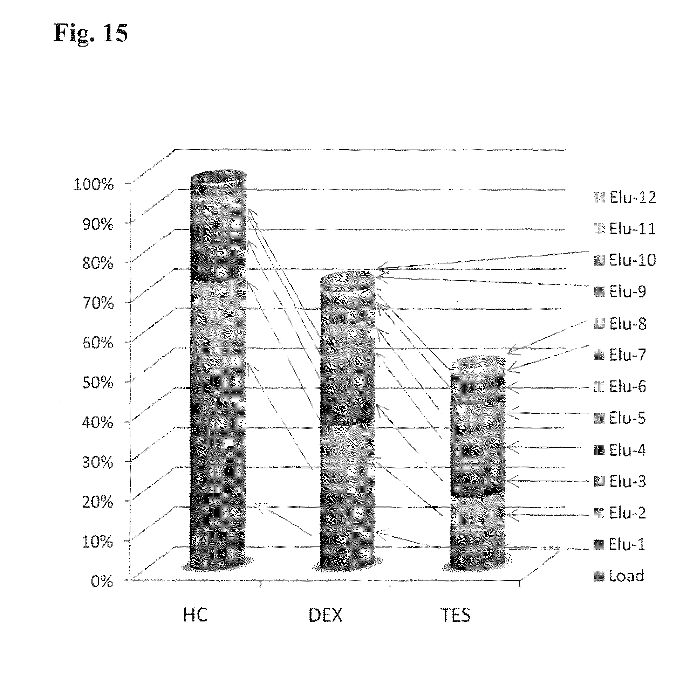

Using the silica gel carrier-packed cartridge as fabricated in Example 1, a sample containing a mixture of hydrocortisone, dexamethasone and testosterone was treated under the conditions depicted in Fig. 11 to separate the respective components. Specifically, the cartridge preliminarily heated to 40°C was charged with 100 µL of a solution containing hydrocortisone, dexamethasone and testosterone added in equal amounts to give a concentration of 10 µg/mL and subsequently cooled to 5°C. Thereafter, water with 5°C was flowed and 12 elutes were collected in 20-µL portions. The collected elutes were subjected to high-performance chromatography on an ODS column (mobile phase consisting of H₂O and CH₃OH at a ratio of 1:1; flow rate, 1.0 mL/min) to measure the contents of hydrocortisone, dexamethasone and testosterone in each elute. The results are shown in Fig. 12 (hydrocortisone), Fig. 13 (dexamethasone) and Fig. 14 (testosterone). Integrating the amounts of hydrocortisone in all elutes gave 97% recovery; integrating the amounts of dexamethasone gave 72% recovery; and integrating the amounts of testosterone gave 51% recovery (Fig. 15). It can be seen that if the pretreatment cartridge of the present invention for separating substances is used, hydrocortisone, dexamethasone and testosterone can be retained by a convenient method and then separated and recovered by merely cooling the cartridge.

### EXAMPLE 6

A silica gel carrier was prepared by repeating the method of Example 1, except that the IPAAm charge was reduced to 8 g so that the packing material as fabricated would have a smaller amount of PIPAAm on the surface of the eventually obtained temperature-responsive stationary phase. Rats were intravenously administered with carbamazepine (5 mg/kg body weight) in the usual manner and after an hour, a whole blood sample was withdrawn from the rats. The blood sample was divided into two portions, one of which was subjected to the usual processes of removing corpuscles and proteins and passed through an ODS column to measure the amount of carbamazepine in the blood. As a result, carbamazepine could be measured in an amount approximately one half the amount administered. The other portion of the blood sample was subjected to a pretreatment by the invention technique as in Example 3 and thereafter passed through an ODS column to measure the amount of carbamazepine in the blood. As a result, carbamazepine could be measured in an amount approximately two thirds of the amount administered. These results show that an analyte in blood can be recovered without significant loss by employing the pretreatment technique of the present invention.

### EXAMPLE 7

A silica gel carrier was prepared by repeating the method of Example 1, except that the IPAAm charge was increased to 12 g so that the packing material as fabricated would have a greater amount of PIPAAm on the surface of the eventually obtained temperature-responsive stationary phase. Rats were intravenously administered with testosterone (2 mg/kg body weight) in the usual manner and 6 hours after the administration, all urine was collected from the rats. The urine sample was divided into two portions, one of which was subjected to the usual process of deproteination and passed through an ODS column to measure the amount of testosterone in the urine. As a result, testosterone could be measured in an amount approximately one fifth of the amount administered. The other portion of the urine sample was subjected to a pretreatment by the invention technique as in Example 5 and thereafter passed through an ODS column to measure the amount of testosterone in the urine. As a result, testosterone could be measured in an amount approximately two fifths of the amount administered. These results show that an analyte in urine can be recovered without significant loss by employing the pretreatment technique of the present invention.

### INDUSTRIAL APPLICABILITY

By using the pretreatment cartridge for separating substances that has been described hereinabove, a convenient operation will suffice for a sample solution to be reduced to a solution containing the substance that need be separated from the sample solution. If this method of pretreatment is used, the substance or interest can be separated intact by merely changing the temperature and the subsequent analyzing or fraction collecting operation can be performed efficiently.

## Claims

1. A pretreatment cartridge for separating substances, the cartridge being packed with a stationary phase that is coated on its surface with a polymer whose tendency to hydration will change within a temperature range of 0-80°C and which is capable of changing the affinity between the substance to be separated and the surface of the stationary phase in response to the shrinkage or swelling of the polymer chain due to temperature change.

2. The pretreatment cartridge for separating substances according to claim 1, wherein the polymer is a homopolymer of an alkyl acrylamide or a copolymer of an acrylamide and another monomer.

3. The pretreatment cartridge for separating substances according to claim 2, wherein the alkyl acrylamide is N-isopropyl acrylamide.

4. The pretreatment cartridge for separating substances according to claim 2, wherein the another monomer is a hydrophobic monomer.

5. The pretreatment cartridge for separating substances according to any one of claims 2 to 4, wherein the alkyl acrylamide and/or another monomer possess electric charges.

6. The pretreatment cartridge for separating substances according to any one of claims 1 to 5, wherein the stationary phase comprises a mixture of silica beads and/or polymer beads having different particle sizes of not more than 100 µm.

7. The pretreatment cartridge for separating substances according to any one of claims 1 to 5, wherein the stationary phase is a monolithic packing material.

8. The pretreatment cartridge for separating substances according to any one of claims 1 to 5, wherein the stationary phase is a disk-shaped packing material and/or a membranous packing material.

9. A method for pretreatment of a sample solution by using the pretreatment cartridge for separating a substance according to any one of claims 1 to 8 at a specified temperature so that the substance in the sample is separated by an aqueous mobile phase.

10. The method for pretreatment of a sample solution according to claim 9, wherein the pretreatment is a deproteination operation.

11. The method for pretreatment of a sample solution according to claim 9 or 10, wherein the substance in the sample solution that need be separated is temporarily adhered to the surface of the stationary phase of the pretreatment cartridge and subsequently eluted by changing the surface property of the stationary phase.

12. The method for pretreatment of a sample solution according to any one of claims 9 to 11, wherein the sample solution is blood, plasma, or urine.

13. The method for pretreatment of a sample solution according to any one of claims 9 to 12, wherein the physiologically active substance is an agrichemical, a pharmaceutical, a peptide, or a protein.
